# EUROPÄISCHE PATENTSCHRIFT

(11) **EP 3 274 199 B1**
(45) Veröffentlichungstag und Bekanntmachung des Hinweises auf die Patenterteilung: **06.01.2021**
(21) Anmeldenummer: 16711578.1
(22) Anmeldetag: 17.03.2016
(51) Int. Cl.: B60G 17/02, B60G 17/06

(54) **SYSTEM ZUR PRÄDIKTIVEN FAHRWERKSSTEUERUNG FÜR EIN GELÄNDEGÄNGIGES NUTZFAHRZEUG**
SYSTEM FOR PREDICTIVE CHASSIS CONTROL FOR AN OFF-ROAD UTILITY VEHICLE
SYSTÈME DE COMMANDE PRÉDICTIVE D'UN CHÂSSIS POUR UN VÉHICULE UTILITAIRE TOUT-TERRAIN

(30) Priorität: 23.03.2015 DE 102015205210
(43) Veröffentlichungstag der Anmeldung: 31.01.2018
(73) Patentinhaber: Deere & Company, Moline, IL 61265-8098 (US)
(72) Erfinder: ZWANZGER, Matthias, 91486 Ühlfeld (DE); LANG, Mattias, 69251 Gaiberg (DE); VON HOLST, Christian, 67310 Hettenleidelheim (DE)
(74) Vertreter: Dehnhardt, Florian Christopher
(86) Internationale Anmeldenummer: PCT/EP2016/055852
(87) Internationale Veröffentlichungsnummer: WO 2016/150820

(56) Entgegenhaltungen:
- EP-A2- 1 288 887
- WO-A1-2014/051890
- DE-A1-102009 054 460
- FR-A1- 3 007 327
- US-A1- 2009 143 936
- US-A1- 2009 164 063
- US-A1- 2012 203 428

## Beschreibung

Die Erfindung betrifft ein System zur prädiktiven Fahrwerkssteuerung für ein geländegängiges Nutzfahrzeug.

Derartige Systeme sind insbesondere aus dem Automobilbereich bekannt. So geht aus der DE 10 2012 017 118 A ein System zur Optimierung des Fahrverhaltens eines mit einem adaptiven Fahrwerk ausgestatteten Kraftfahrzeugs hervor, bei dem ein topografisches Profil einer in Fahrtrichtung vorausliegenden Fahrbahnoberfläche zur Vorhersage eines zu erwartenden Bewegungsverhaltens des Kraftfahrzeugs erfasst sowie das Dämpfungsverhalten des Fahrwerks auf Basis des zu erwartenden Bewegungsverhaltens vorausschauend angepasst wird. Die Erfassung der vorausliegenden Fahrbahnoberfläche erfolgt durch Verwendung bildgebender Sensoren, beispielsweise eines Laserscanners oder einer Mono- bzw. Stereokamera. Aufgrund der durchzuführenden Bildverarbeitung lässt sich das bekannte System nur mit vergleichsweise hohem technischen Aufwand realisieren.

Aus der DE 10 2009 054460 A1 ist weiterhin ein System zur prädikativen Fahrwerkssteuerung nach dem Oberbegriff des Anspruchs 1 bekannt.

Es ist daher Aufgabe der vorliegenden Erfindung, ein vereinfachtes System zur prädiktiven Fahrwerkssteuerung für ein geländegängiges Nutzfahrzeug anzugeben, welches die Fehlansteuerung der Radfedereinrichtung aufgrund zwischenzeitlich eingetretener signifikanter Veränderungen der Bodenoberfläche vermeidet.

Diese Aufgabe wird durch ein System mit den Merkmalen des Patentanspruchs 1 gelöst.

Das erfindungsgemäße System zur prädiktiven Fahrwerkssteuerung für ein geländegängiges Nutzfahrzeug umfasst neben einer bezüglich einer Dämpfungs- und/oder Federungscharakteristik steuerbaren Radfedereinrichtung ein Sensormittel zur Ermittlung eines Kraftverlaufs einer aufgrund eines Zustands einer zu befahrenden Bodenoberfläche auf die Radfedereinrichtung einwirkenden Störung, ein Navigationsmittel zur Ermittlung einer aktuellen Geoposition des geländegängigen Nutzfahrzeugs in Form zugehöriger Positionsdaten, sowie eine Speichereinheit, in der eine Kontrolleinheit den aufgrund der Störung hervorgerufenen Kraftverlauf oder eine daraus abgeleitete Größe einschließlich der damit korrespondierenden Positionsdaten als zugehöriges Datenpaar hinterlegt, wobei die Kontrolleinheit durch kontinuierlichen Abgleich der von dem Navigationsmittel bereitgestellten aktuellen Geoposition des geländegängigen Nutzfahrzeugs mit den hinterlegten Positionsdaten ein bevorstehendes erneutes Überfahren der Störung erkennt und die Dämpfungs- und/oder Federungscharakteristik auf Grundlage des hinterlegten Kraftverlaufs oder der daraus abgeleiteten Größe durch Vorsteuerung der Radfedereinrichtung derart anpasst, dass eine Einwirkung der Störung auf die Radfedereinrichtung zumindest teilweise kompensiert wird.

Das erfindungsgemäße System macht sich den beispielsweise für den landwirtschaftlichen Bereich typischen Umstand zunutze, dass im Falle der Feldbearbeitung aufgrund einer Vielzahl aufeinander folgender Bearbeitungsschritte ein und dieselbe Stelle des Felds bzw. peripherer Zufahrtswege und -bereiche in vergleichsweise kurzen Zeitabständen wiederholt überfahren wird. Die Abspeicherung der Datenpaare ermöglicht es daher, eine Kartierung der Störungen vorzunehmen und zur Verbesserung des Fahrkomforts sowie des Bodenkontakts des geländegängigen Nutzfahrzeugs durch entsprechende Vorsteuerung der Radfedereinrichtung vorzuhalten. Die kartierten Störungen repräsentieren hierbei letztlich den Zustand bzw. Eigenschaften der befahrenen Bodenoberfläche hinsichtlich Bodenunebenheiten, Wellen, Ackerfurchen, Schlaglöchern und dergleichen.

Bei dem geländegängigen Nutzfahrzeug kann es sich beispielsweise um einen mit einer einzelradgefederten Vorderachse ausgestatteten landwirtschaftlichen Traktor handeln, sodass insgesamt zwei der Radfedereinrichtungen vorgesehen sind. Für jede der beiden Radfedereinrichtungen kann eine radindividuelle Ermittlung und Abspeicherung zugehöriger Datenpaare erfolgen. Abweichend davon kann der landwirtschaftliche Traktor auch eine gefederte Pendelachse aufweisen, wobei die Ermittlung der Datenpaare dann nicht radindividuell, sondern achsbezogen durchgeführt wird.

Die Radfedereinrichtung ist von herkömmlicher Bauart und umfasst ein hydraulisches Federbein, das zwischen einem an einem Fahrzeugchassis schwenkbar befestigten Radlenker bzw. einem Achskörper der Pendelachse einerseits und einer an dem Fahrzeugchassis vorgesehenen Anbindungsstelle andererseits verläuft. Ein Hydraulikkolben unterteilt einen von dem hydraulischen Federbein umfassten Hydraulikzylinder in eine Ringkammer sowie eine Kolbenkammer. Ringkammer und Kolbenkammer kommunizieren über ein bezüglich seines Durchflusswiderstands verstellbares Drosselventil miteinander, sodass sich die Dämpfungscharakteristik des hydraulischen Federbeins variieren lässt. Ein Drucksteuerventil erlaubt ferner eine Anpassung des Arbeitsdrucks und damit der Federungscharakteristik des hydraulischen Federbeins. Sowohl Drosselventil als auch Druckventil weisen zugehörige elektrisch steuerbare Stellelemente auf, die es der Kontrolleinheit erlauben, Durchflusswiderstand und/oder Arbeitsdruck des hydraulischen Federbeins zum Zwecke der Anpassung der Dämpfungs- und/oder Federungscharakteristik zu beeinflussen.

Es sei an dieser Stelle angemerkt, dass eine Verwendung des erfindungsgemäßen Systems nicht auf den landwirtschaftlichen Bereich beschränkt ist, vielmehr lässt sich dieses ebenso gut auch im Straßenbau oder dergleichen einsetzen.

Vorteilhafte Ausführungen des erfindungsgemäßen Systems gehen aus den Unteransprüchen hervor.

Erfindungsgemäß handelt es sich bei der abgeleiteten Größe um eine der jeweiligen Störung zugewiesene Kategorie. Durch Kategorisierung der Störung lässt sich der Datenverarbeitungsaufwand im Zusammenhang mit der Ansteuerung der Radfedereinrichtung weiter reduzieren, wobei Kategorien wie "Befahren eines unebenen Untergrunds", "Befahren eines welligen Untergrunds", "Überfahren einer tiefen Ackerfurche", "Schnelles Überfahren eines Schlaglochs", "Langsames Überfahren eines Schlaglochs" denkbar sind. Das Vorliegen einer bestimmten Kategorie kann hierbei von der Kontrolleinheit auf Basis einer Amplituden- und/ Frequenzanalyse des erfassten Kraftverlaufs ermittelt werden. Die Beurteilung der Fortbewegungsgeschwindigkeit des geländegängigen Nutzfahrzeugs erfolgt in bekannter Weise durch Auswertung der mittels zugehöriger Raddrehzahlsensoren erfassten Raddrehzahlen.

Vorzugsweise handelt es sich bei dem Sensormittel um einen Drucksensor zur Erfassung eines in einem hydraulischen Federbein der Radfedereinrichtung vorliegenden Arbeitsdrucks. Aus dem sensorisch erfassten Arbeitsdruck ermittelt die Kontrolleinheit unter Zugrundelegung des bekannten Kolbenquerschnitts des hydraulischen Federbeins die auf die Radfedereinrichtung einwirkende Kraft sowie deren Verlauf über die Zeit.

Es sei an dieser Stelle angemerkt, dass die Ermittlung des Kraftverlaufs auch durch Verwendung eines der Radfedereinrichtung zugeordneten Beschleunigungssensors erfolgen kann, wobei der Beschleunigungssensor eine im Bereich der Radfedereinrichtung am Fahrzeugchassis auftretende Vertikalbeschleunigung misst.

Des Weiteren kann es sich bei dem Navigationsmittel um ein satellitengestütztes GPS-Navigationssystem handeln. Zur Erhöhung der Genauigkeit der von dem GPS-Navigationssystem bereitgestellten Positionsdaten kann dieses als sogenanntes Echtzeitnavigationssystem nach dem RTK-Verfahren (Real Time Kinematic) ausgebildet sein. Dessen Funktionsweise beruht auf Trägerphasenmessungen empfangener GPS-Satellitensignale, wobei Korrekturdaten mit einer Genauigkeit im Zentimeterbereich von einer stationären Referenzstation, die beispielsweise am Rand eines zu bearbeitenden Felds aufgestellt ist, in Echtzeit an das GPS-Navigationssystem übermittelt werden. Ein derartiges GPS-Navigationssystem ist insbesondere bei landwirtschaftlichen Traktoren mit autonomer Lenkung in aller Regel vorhanden, sodass dessen kostengünstige Mitnutzung möglich ist.

Erfindungsgemäß wird durch die Kontrolleinheit das in der Speichereinheit hinterlegte Datenpaar mit Ablauf einer vorgegebenen Speicherzeit gelöscht. Das Datenpaar kann hierzu von der Kontrolleinheit mit einem Zeitstempel versehen werden, wobei die mit Setzen des Zeitstempels beginnende Speicherzeit derart vorgegeben ist, dass sich eine Fehlansteuerung der Radfedereinrichtung aufgrund zwischenzeitlich eingetretener signifikanter Veränderungen des Zustands der befahrenen Bodenoberfläche weitgehend ausschließen lässt.

Erfindungsgemäß ist seitens der Kontrolleinheit eine variable Vorgabe der Speicherzeit in Abhängigkeit der Wetterbedingungen vorgesehen. So ist die Speicherzeit entsprechend zu verkürzen, wenn aufgrund von Starkregen, Stürmen oder dergleichen mit erheblichen Veränderungen des Zustands der befahrenen Bodenoberfläche zu rechnen ist. Die hierfür erforderlichen Wetterdaten lassen sich beispielsweise mittels eines in dem geländegängigen Nutzfahrzeug befindlichen UKW-Radios empfangen und der Kontrolleinheit zur Verfügung stellen.

Zusätzlich oder alternativ kann die Kontrolleinheit das in der Speichereinheit hinterlegte Datenpaar beim erneuten Überfahren der Störung insbesondere für den Fall aktualisieren, wenn diese feststellt, dass die Einwirkung der Störung auf die Radfedereinrichtung aufgrund zwischenzeitlicher Veränderungen des Zustands der befahrenen Bodenoberfläche lediglich unzureichend kompensiert wird. Ob dies der Fall ist, erkennt die Kontrolleinheit durch Auswertung des insoweit beim erneuten Überfahren der Störung ermittelten Kraftverlaufs.

Die Kontrolleinheit kann das Datenpaar zum Zwecke der Speicherung zusätzlich an eine zentrale Datenbank übermitteln, wobei sich die übermittelten Datenpaare in kartierter und anonymisierter Form weiteren Nutzern zur Verfügung stellen lassen. Umgekehrt ist auch ein Empfang der von anderen Nutzern an die zentrale Datenbank übermittelten Datenpaare vorstellbar.

Im einfachsten Fall kann die Übermittlung drahtlos mittels eines GSM-Netzwerks erfolgen, wozu die Kontrolleinheit über eine GSM-Schnittstelle mit der zentralen Datenbank kommuniziert.

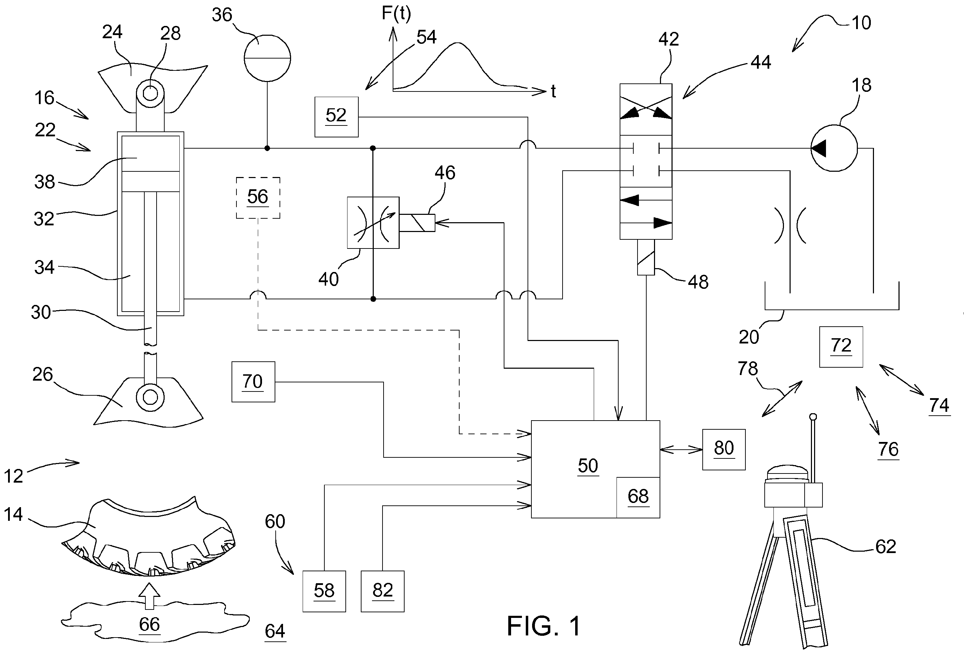

Das erfindungsgemäße System wird im Folgenden anhand der beigefügten Zeichnung näher erläutert. Die einzige Figur zeigt eine beispielhafte Ausführungsform des erfindungsgemäßen Systems zur prädiktiven Fahrwerksteuerung für ein geländegängiges Nutzfahrzeug.

Das System 10 ist Bestandteil eines nicht näher dargestellten geländegängigen Nutzfahrzeugs, bei dem es sich im vorliegenden Fall um einen mit einer einzelradgefederten Vorderachse 12 ausgestatteten landwirtschaftlichen Traktor handelt. Die Vorderachse 12 weist lenkbare Vorderräder 14 auf, denen bezüglich ihrer Dämpfungs- und/oder Federungscharakteristik steuerbare Radfedereinrichtungen 16 zugeordnet sind. Aus Gründen der Übersichtlichkeit ist in der Figur lediglich eine der Radfedereinrichtungen 16 wiedergegeben. Diese wird mittels eines Kompressors 18 mit Hydraulikflüssigkeit aus einem zentralen Reservoir 20 eines Hydrauliksystems des landwirtschaftlichen Traktors versorgt.

Die Radfedereinrichtung 16 ist von herkömmlicher Bauart und weist ein hydraulisches Federbein 22 auf, das zwischen einem an einem Fahrzeugchassis 24 schwenkbar befestigten Radlenker 26 und einer an dem Fahrzeugchassis 24 vorgesehenen Anbindungsstelle 28 verläuft.

Ein Hydraulikkolben 30 unterteilt einen von dem hydraulischen Federbein 22 umfassten Hydraulikzylinder 32 in eine Ringkammer 34 sowie eine mit einem Membranspeicher 36 verbundene Kolbenkammer 38. Ringkammer 34 und Kolbenkammer 38 kommunizieren über ein bezüglich seines Durchflusswiderstands verstellbares Drosselventil 40 miteinander. Ein als 4/3-Wegeventil 42 ausgebildetes Drucksteuerventil 44 mit Sperrmittelstellung erlaubt ferner eine Anpassung des Arbeitsdrucks. Sowohl Drosselventil 40 als auch Drucksteuerventil 44 weisen zugehörige elektrisch steuerbare Stellelemente 46, 48 auf, sodass sich Durchflusswiderstand und/oder Arbeitsdruck des hydraulischen Federbeins 22 und damit die Dämpfungs- und/oder Federungscharakteristik der Radfedereinrichtung 16 seitens einer Kontrolleinheit 50 beeinflussen lassen.

Ein als Drucksensor 52 ausgebildetes Sensormittel 54 dient der Erfassung des in der Kolbenkammer 38 des hydraulischen Federbeins 22 vorliegenden Arbeitsdrucks. Aus dem sensorisch erfassten Arbeitsdruck ermittelt die Kontrolleinheit 50 unter Zugrundelegung des bekannten Kolbenquerschnitts des hydraulischen Federbeins 22 die auf die Radfedereinrichtung 16 wirkende Kraft sowie deren Verlauf F(t) über die Zeit t.

Zusätzlich oder alternativ erfolgt die Ermittlung des Kraftverlaufs F(t) durch Verwendung eines der Radfedereinrichtung 16 zugeordneten Beschleunigungssensors 56, wobei der Beschleunigungssensor 56 eine im Bereich der Radfedereinrichtung 16 am Fahrzeugchassis 24 auftretende Vertikalbeschleunigung misst.

Des Weiteren ist ein als satellitengestütztes GPS-Navigationssystem 58 ausgebildetes Navigationsmittel 60 vorhanden. Dieses dient der Ermittlung einer aktuellen Geoposition des landwirtschaftlichen Traktors in Form zugehöriger Positionsdaten.

Zur Erhöhung der Genauigkeit der von dem GPS-Navigationssystem 58 bereitgestellten Positionsdaten ist dieses als sogenanntes Echtzeitnavigationssystem nach dem RTK-Verfahren (Real Time Kinematic) ausgebildet. Dessen Funktionsweise beruht auf Trägerphasenmessungen empfangener GPS-Satellitensignale, wobei Korrekturdaten mit einer Genauigkeit im Zentimeterbereich von einer stationären Referenzstation 62, die beispielsweise am Rand eines zu bearbeitenden Felds aufgestellt ist, in Echtzeit an das GPS-Navigationssystem 58 übermittelt werden.

Eine je nach Zustand der befahrenen Bodenoberfläche 64 über das zugehörige Vorderrad 14 auf die Radfedereinrichtung 16 einwirkende Störung 66 führt zu einer entsprechenden zeitlichen Änderung des in der Kolbenkammer 38 des hydraulischen Federbeins 22 vorliegenden Arbeitsdrucks bzw. der im Bereich der Radfedereinrichtung 16 am Fahrzeugchassis 24 auftretenden Vertikalbeschleunigung. Der solchermaßen aufgrund der Störung 66 hervorgerufene Kraftverlauf F(t) wird von der Kontrolleinheit 50 einschließlich der damit korrespondierenden Positionsdaten als Datenpaar in einer Speichereinheit 68 hinterlegt. Die Ermittlung und Abspeicherung der Datenpaare erfolgt hierbei radindividuell für jede der beiden Radfedereinrichtungen 16.

Für den Fall, dass der landwirtschaftliche Traktor anstelle einer einzelradgefederten Vorderachse 12 eine gefederte Pendelachse aufweist, erfolgt die Ermittlung der Datenpaare nicht radindividuell, sondern achsbezogen.

Gemäß einer optionalen Ausgestaltung des Systems 10 legt die Kontrolleinheit 50 anstelle des ermittelten Kraftverlaufs F(t) eine daraus abgeleitete Größe in der Speichereinheit 68 ab. Bei der abgeleiteten Größe handelt es sich um eine der Störung 66 zugewiesene Kategorie, wobei unter anderem die Kategorien "Befahren eines unebenen Untergrunds", "Befahren eines welligen Untergrunds", Überfahren einer tiefen Ackerfurche", "Schnelles Überfahren eines Schlaglochs", "Langsames Überfahren eines Schlaglochs" vorgesehen sind. Das Vorliegen einer bestimmten Kategorie wird hierbei von der Kontrolleinheit 50 auf Basis einer Amplituden- und/oder Frequenzanalyse des ermittelten Kraftverlaufs F(t) bestimmt. Die Beurteilung der Fortbewegungsgeschwindigkeit des landwirtschaftlichen Traktors erfolgt in bekannter Weise durch Auswertung der mittels zugehöriger Raddrehzahlsensoren 70 erfassten Raddrehzahlen.

Erkennt die Kontrolleinheit 50 durch kontinuierlichen Abgleich der von dem GPS-Navigationssystem 58 bereitgestellten aktuellen Geoposition des landwirtschaftlichen Traktors mit den in der Speichereinheit 68 hinterlegten Positionsdaten ein bevorstehendes erneutes Überfahren der Störung 66, so passt diese die Dämpfungs- und/oder Federungscharakteristik der Radfedereinrichtung 16 auf Grundlage des in der Speichereinheit 68 hinterlegten Kraftverlaufs F(t) bzw. der diesem zugewiesenen Kategorie durch Vorsteuerung wenigstens eines der beiden Stellelemente 46, 48 derart an, dass eine Einwirkung der Störung 66 auf die Radfedereinrichtung 16 zumindest teilweise kompensiert wird.

Zusätzlich übermittelt die Kontrolleinheit 50 das Datenpaar zum Zwecke der Speicherung an eine zentrale Datenbank 72 , sodass sich dieses in kartierter und anonymisierter Form weiteren Nutzern 74, 76 zur Verfügung stellen lässt. Die Übermittlung erfolgt drahtlos mittels eines GSM-Netzwerks 78, wozu die Kontrolleinheit 50 über eine GSM-Schnittstelle 80 mit der zentralen Datenbank 72 in Verbindung steht. Diese erlaubt zugleich einen Empfang von Datenpaaren, die von den anderen Nutzern 74, 76 an die zentrale Datenbank 72 übermittelt werden.

Die Kontrolleinheit 50 löscht das in der Speichereinheit 68 hinterlegte Datenpaar mit Ablauf einer vorgegebenen Speicherzeit. Das Datenpaar wird hierzu von der Kontrolleinheit 50 mit einem Zeitstempel versehen. Die mit Setzen des Zeitstempels beginnende Speicherzeit wird von der Kontrolleinheit 50 derart vorgegeben, dass sich eine Fehlansteuerung der Radfedereinrichtung 16 aufgrund zwischenzeitlich eingetretener signifikanter Veränderungen des Zustands der befahrenen Bodenoberfläche 64 weitgehend ausschließen lässt. Die Speicherzeit liegt hierzu im Bereich einiger Tage.

Die Vorgabe der Speicherzeit seitens der Kontrolleinheit 50 erfolgt variabel. So wird die Speicherzeit entsprechend verkürzt, wenn aufgrund von Starkregen, Stürmen oder dergleichen mit erheblichen Veränderungen des Zustands der befahrenen Bodenoberfläche 64 zu rechnen ist. Die hierfür erforderlichen Wetterdaten werden mittels eines in dem landwirtschaftlichen Traktor befindlichen UKW-Radios 82 empfangen und der Kontrolleinheit 50 zur Verfügung gestellt.

Zusätzlich aktualisiert die Kontrolleinheit 50 das Datenpaar beim erneuten Überfahren der Störung 66 für den Fall, wenn diese feststellt, dass die Einwirkung der Störung 66 auf die Radfedereinrichtung 16 aufgrund zwischenzeitlicher Veränderungen des Zustands der befahrenen Bodenoberfläche 64 lediglich unzureichend kompensiert wird. Ob dies der Fall ist, erkennt die Kontrolleinheit 50 durch Auswertung des insoweit beim erneuten Überfahren der Störung 66 ermittelten Kraftverlaufs F(t). Das solchermaßen aktualisierte Datenpaar wird von der Kontrolleinheit 50 zugleich mit einem neuen Zeitstempel versehen.

## Patentansprüche

1. System zur prädiktiven Fahrwerkssteuerung für ein geländegängiges Nutzfahrzeug, mit einer bezüglich einer Dämpfungs- und/oder Federungscharakteristik steuerbaren Radfedereinrichtung (16), einem Sensormittel (54) zur Ermittlung eines Kraftverlaufs (F(t)) einer aufgrund eines Zustands einer zu befahrenden Bodenoberfläche (64) auf die Radfedereinrichtung (16) einwirkenden Störung (66), einem Navigationsmittel (60) zur Ermittlung einer aktuellen Geoposition des geländegängigen Nutzfahrzeugs in Form zugehöriger Positionsdaten, sowie einer Speichereinheit (68), in der eine Kontrolleinheit (50) eine aus dem aufgrund der Störung (66) hervorgerufenen Kraftverlauf (F(t)) abgeleitete Größe einschließlich der damit korrespondierenden Positionsdaten als zugehöriges Datenpaar hinterlegt, wobei die Kontrolleinheit (50) durch kontinuierlichen Abgleich der von dem Navigationsmittel (60) bereitgestellten aktuellen Geoposition des geländegängigen Nutzfahrzeugs mit den hinterlegten Positionsdaten ein bevorstehendes erneutes Überfahren der Störung (66) erkennt und die Dämpfungs- und/oder Federungscharakteristik auf Grundlage der hinterlegten Größe durch Vorsteuerung der Radfedereinrichtung (16) derart anpasst, dass eine Einwirkung der Störung (66) auf die Radfedereinrichtung (16) zumindest teilweise kompensiert wird, wobei es sich bei der abgeleiteten Größe um eine der jeweiligen Störung (66) zugewiesene Kategorie handelt, **dadurch gekennzeichnet, dass** die Kontrolleinheit (50) das in der Speichereinheit (68) hinterlegte Datenpaar mit Ablauf einer vorgegebenen Speicherzeit löscht, wobei seitens der Kontrolleinheit (50) eine variable Vorgabe der Speicherzeit in Abhängigkeit der Wetterbedingungen erfolgt.

2. System nach Anspruch 1, **dadurch gekennzeichnet, dass** es sich bei dem Sensormittel (54) um einen Drucksensor (52) zur Erfassung eines in einem hydraulischen Federbein (22) der Radfedereinrichtung (16) vorliegenden Arbeitsdrucks und/oder um einen Beschleunigungssensor zur Messung einer im Bereich der Radfedereinrichtung (16) an einem Fahrzeugchassis (24) auftretenden Vertikalbeschleunigung handelt.

3. System nach Anspruch 1 oder 2, **dadurch gekennzeichnet, dass** es sich bei dem Navigationsmittel (60) um ein satellitengestütztes GPS-Navigationssystem (58) handelt.

4. System nach wenigstens einem der Ansprüche 1 bis 3, **dadurch gekennzeichnet, dass** die Kontrolleinheit (50) das in der Speichereinheit (68) hinterlegte Datenpaar beim erneuten Überfahren der Störung (66) aktualisiert.

5. System nach wenigstens einem der Ansprüche 1 bis 4, **dadurch gekennzeichnet, dass** die Kontrolleinheit (50) das Datenpaar zum Zwecke der Speicherung zusätzlich an eine zentrale Datenbank (72) übermittelt und/oder dass von anderen Nutzern an die zentrale Datenbank (72) übermittelte Datenpaare empfängt.

6. System nach Anspruch 5, **dadurch gekennzeichnet, dass** die Übermittlung drahtlos mittels eines GSM-Netzwerks (78) erfolgt.

7. Geländegängiges Nutzfahrzeug mit einem System (10) zur prädiktiven Fahrwerkssteuerung nach wenigstens einem der Ansprüche 1 bis 6.

## Claims

1. System for predictive chassis control for an off-road utility vehicle, with a wheel-spring device (16) which is controllable with respect to a damping characteristic and/or suspension characteristic, with a sensor means (54) for ascertaining a force profile (F(t)) of a disturbance (66) acting on the wheel-spring device (16) by reason of a condition of a ground surface (64) to be driven along, with a navigation means (60) for ascertaining a current geoposition of the off-road utility vehicle in the form of associated position data, and with a memory unit (68) in which a control unit (50) saves a quantity derived from the force profile (F(t)) brought about by reason of the disturbance (66), inclusive of the position data corresponding thereto, as an associated data pair, wherein the control unit (50) detects an imminent renewed crossing of the disturbance (66) by continuous reconciliation of the current geoposition, made available by the navigation means (60), of the off-road utility vehicle with the saved position data, and adapts the damping characteristic and/or suspension characteristic, on the basis of the saved quantity by pilot control of the wheel-spring device (16) in such a manner that an influence of the disturbance (66) on the wheel-spring device (16) is at least partly compensated, wherein the derived quantity is a category allocated to the respective disturbance (66), **characterized in that** the control unit (50) deletes the data pair saved in the memory unit (68) upon expiration of a predetermined storage-time, wherein a variable presetting of the storage-time is undertaken by the control unit (50) as a function of the meteorological conditions.

2. System according to Claim 1, **characterized in that** the sensor means (54) is a pressure sensor (52) for capturing a working pressure existing in a hydraulic spring strut (22) of the wheel-spring device (16), and/or an acceleration sensor for measuring a vertical acceleration arising on a vehicle chassis (24) in the region of the wheel-spring device (16).

3. System according to Claim 1 or 2, **characterized in that** the navigation means (60) is a satellite-aided GPS navigation system (58).

4. System according to at least one of Claims 1 to 3, **characterized in that** the control unit (50) updates the data pair saved in the memory unit (68) upon renewed crossing of the disturbance (66).

5. System according to at least one of Claims 1 to 4, **characterized in that** the control unit (50) additionally transmits the data pair to a central database (72) for the purpose of storage and/or **in that** receives data pairs transmitted to the central database (72) by other users.

6. System according to Claim 5, **characterized in that** the transmission is undertaken in wireless manner by means of a GSM network (78).

7. Off-road utility vehicle with a system (10) for predictive chassis control according to at least one of Claims 1 to 6.

## Revendications

1. Système de commande prédictive de mécanisme de roulement pour véhicule utilitaire tout-terrain, comprenant
un moyen de suspension de roue (16) qui peut être commandé en ce qui concerne une caractéristique d'amortissement et/ou de suspension, un moyen capteur (54) destiné à déterminer une courbe de force (F(t)) d'une perturbation (66) agissant sur le moyen de suspension de la roue (16) sur la base d'un état d'une surface de sol (64) à parcourir, un moyen de navigation (60) destiné à déterminer une position géographique actuelle du véhicule utilitaire tout-terrain sous la forme de données de position associées, et une unité de mémorisation (68) dans laquelle une unité de commande (50) mémorise une grandeur dérivée de la courbe de force (F(t)) provoquée par la perturbation (66), y compris des données de position correspondant à celle-ci, sous la forme d'une paire de données associée, dans lequel l'unité de commande (50) détecte un nouveau franchissement imminent de la perturbation (66) par comparaison continue de la position géographique actuelle du véhicule utilitaire tout-terrain fournie par le moyen de navigation (60) avec les données de position mémorisées, et adapte la caractéristique d'amortissement et/ou de suspension sur la base de la grandeur mémorisée par précommande du moyen de suspension de roue (16) de manière à compenser au moins partiellement un effet de la perturbation (66) sur le moyen de suspension de roue (16), dans lequel la grandeur dérivée est une catégorie attribuée à la perturbation (66) respective, **caractérisé en ce que** l'unité de commande (50) supprime la paire de données mémorisée dans l'unité de mémorisation (68) à l'expiration d'une durée de mémorisation prédéterminée, dans lequel un préréglage variable du temps de mémorisation est effectué par l'unité de commande (50) en fonction des conditions météorologiques.

2. Système selon la revendication 1, **caractérisé en ce que** le moyen de détection (54) est un capteur de pression (52) destiné à détecter une pression de fonctionnement présente dans une jambe de force hydraulique (22) du moyen de suspension de roue (16) et/ou un capteur d'accélération destiné à mesurer une accélération verticale se produisant dans la zone du moyen de suspension de roue (16) sur un châssis de véhicule (24).

3. Système selon la revendication 1 ou 2, **caractérisé en ce que** le moyen de navigation (60) est un système de navigation GPS assisté par satellite (58).

4. Système selon au moins l'une des revendications 1 à 3, **caractérisé en ce que** l'unité de commande (50) actualise la paire de données mémorisée dans l'unité de mémorisation (68) lorsque la perturbation (66) est à nouveau franchie.

5. Système selon au moins l'une des revendications 1 à 4, **caractérisé en ce que** l'unité de commande (50) transmet en outre la paire de données à une base de données centrale (72) aux fins de la mémorisation et/ou **en ce que** reçoit des paires de données transmises à la base de données centrale (72) par d'autres utilisateurs.

6. Système selon la revendication 5, **caractérisé en ce que** la transmission s'effectue sans fil au moyen d'un réseau GSM (78).

7. Véhicule utilitaire tout-terrain équipé d'un système (10) de commande prédictive de mécanisme de roulement selon au moins l'une des revendications 1 à 6.
